# EUROPÄISCHE PATENTANMELDUNG

(11) **EP 2 497 595 A2**
(43) Veröffentlichungstag der Anmeldung: **12.09.2012**
(21) Anmeldenummer: 12158850.3
(22) Anmeldetag: 09.03.2012
(51) Int. Cl.: B23K 1/00, B23K 1/008, B23K 3/08

(54) **Verfahren zur Herstellung eines Wärmeübertragers**

(30) Priorität: 09.03.2011 DE 102011005265
(71) Anmelder: Behr GmbH & Co. KG, 70469 Stuttgart (DE)
(72) Erfinder: Englert, Peter, 74177 Bad Friedrichshall (DE); Ignjatovic, Spasoje, 75428 Illingen (DE); Mamber, Oliver, 71706 Markgröningen (DE)
(74) Vertreter: Grauel, Andreas

(57) **Zusammenfassung**

Bei einem Verfahren zur Herstellung eines Wärmeübertragers (1) mit einem ersten Strömungsraum zum Durchleiten eines ersten Fluides mit den Schriftten: zur Verfügung stellen von Komponenten (24, 26, 27, 30, 31) des Wärmeübertragers (1) mit einer Lotplattierung, Verbinden der Komponenten (24, 26, 27, 30, 31) des Wärmeübertragers (1) zu einem Wärmeübertragerblock, Einbringen des Wärmeübertragerblockes in einen Lötofen und Löten des Wärmeübertragerblockes, Ausbringen des gelöteten Wärmeübertragerblockes als Wärmeüberträger (1) aus dem Lötöfen, Entfernen von Ablagerungen an wenigstens einer Dichtfläche (4) des Wärmeübertragers (1), sollen Ablagerungen an Dichtflächen (4) des Wärmeübertragers (1) nach dem Löten einfach, kostengünstig und ohne negative Auswirkungen entfernt werden können.

Diese Aufgabe wird dadurch gelöst, dass die Ablagerungen an der wenigstens einen Dichtfläche (4) mit einem Laserstrahl entfernt werden.

## Beschreibung

Die Erfindung betrifft ein Verfahren zur Herstellung eines Wärmeübertragers gemäß dem Oberbegriff des Anspruches 1.

Wärmeübertrager werden in den verschiedensten technischen Anwendungen zur Übertragung von Wärme von einem Fluid auf ein anderes Fluid eingesetzt. Der Wärmeübertrager weist dabei beispielsweise einen ersten Strömungsraum zum Durchleiten eines ersten Fluides auf und um den Wärmeübertrager wird ein zweites Fluid geleitet, so dass von dem ersten Fluid auf das zweite Fluid oder umgekehrt Wärme übertragen werden kann. Abweichend kann der Wärmeübertrager auch einen zweiten Strömungsraum zum Durchleiten eines zweiten Fluides aufweisen, so dass dadurch von dem durch den ersten Strömungsraum geleiteten ersten Fluid Wärme auf das durch den zweiten Strömungsraum geleiteten zweiten Fluid geleitet werden kann oder umgekehrt. Wärmeübertrager sind beispielsweise Kondensatoren oder Verdampfer in Klimaanlagen, Kühlmittelkühler im Motorkühlkreislauf von Verbrennungsmotoren oder auch Ladeluftkühler und Ölkühler

Die Komponenten der Wärmeübertrager bestehen im Allgemeinen aus Metall, z. B. Aluminium oder Aluminiumlegierungen. Zur Herstellung der Wärmeübertrager werden zunächst die Komponenten des Wärmeübertragers mit einer Lotplattierung zur Verfügung gestellt, diese Komponenten werden anschließend zu einem Wärmeübenrtragerblock verbunden und anschließend in einem Lötofen verlötet. Aufgrund des Lötens im Lötofen schmilzt das Lot und es kommt zu einer stoffschlüssigen Verbindung der Komponenten des Wärmeübertragers, so dass sich ein fluiddichter erster und vorzugsweise auch ein fluiddichter zweiter Strömungsraum zum Durchleiten eines ersten Fluides und vorzugsweise eines zweiten Fluides ausbildet. Um einen vollständigen und fluiddichten Lötvorgang bzw. eine vollständige und fluiddichte Verbindung der Komponenten des Wärmeübertragers während des Lötens zu erreichen, sind die Komponenten des Wärmeübertragers zusätzlich mit einem Lötflussmittel, z. B. Kalium-Fluoraluminate, versehen. Diese Lötflussmittel lösen während des Lötprozesses die den Lötfluss störenden Oxide bzw. oberflächlichen Verunreinigungen auf der Lotoberfläche und erstarren nach dem Abkühlen der verlöteten Komponente wie das Lot. Nach dem Löten verbleiben daher Kalium-, Aluminium- und Fluor-Verbindungen, an der Oberfläche des Wärmeübertragers. Das Lötflussmittel weist während des Lötprozesses im Lötofen eine hohe Fluidität auf, so dass es nicht nur an den Oberflächen der Komponenten des Wärmeübertragers bzw. an dem Wärmeübertrager vorhanden ist, an denen vor dem Einbringen in dem Lötofen das Lötflussmittel vorhanden ist, sondern aufgrund der Fließfähigkeit des Lötflussmittels während des Lötvorganges kriecht oder fließt das Lötflussmittel auch zu Dichtflächen des Wärmeübertragers und bildet Ablagerungen auch an den Dichtflächen nach dem Abkühlen.

Der Wärmeübertrager weist eine erste Einlassöffnung zum Einleiten des ersten Fluides und eine erste Auslassöffnung zum Ausleiten des ersten Fluides auf. An der ersten Ein- und Auslassöffnung für das erste Fluid sind Dichtflächen, z. B. Flanschflächen, vorhanden, um hieran mittels Leitungen oder Schläuchen das ersten Fluid in den Wärmeübertrager ein- oder auszuleiten. Abweichend hiervon kann an den Dichtflächen, beispielsweise bei einem Wärmeübertrager an einem Motorblock, die Dichtfläche des Wärmeübertragers unmittelbar an den Motorblock eines Verbrennungsmotors angeflanscht bzw. befestigt werden und im Bereich der Ein- oder Auslassöffnung weist der Motorblock ebenfalls eine Öffnung auf. Zum Abdichten der Dichtflächen sind im Allgemeinen Dichtringe vorhanden. Die Dichtringe, z. B. O-Ring-Dichtungen, können dabei auch in Ringnuten angeordnet sein. Abweichend hiervon kann die Abdichtung an den Dichtflächen zu Schläuchen, Anflanschflächen oder Leitungen auch mit einem Kleber oder einer Dichtmasse erfolgen, die nach dem Verbau bzw. beim Verbau aushärtet bzw. vernetzt werden.

Die Dichtflächen des Wärmeübertragers sind im Allgemeinen eben, können jedoch auch gekrümmt ausgebildet sein. Die Dichtflächen werden dabei spanend bearbeitet, z. B. mit Fräsen, Schleifen oder Drehen vor dem Einbringen der Komponente mit der Dichtfläche in den Lötofen bzw. dem Verbinden der Komponenten zu dem Wärmeübertragerblock. Lötflussmittel an den Dichtflächen behindert die Dichtigkeit an der Dichtfläche beim späteren Verbau des Wärmeübertragers und kann bei Betrieb zu Undichtigkeiten im Kreislauf führen. Dies liegt unter anderem daran, dass das Lötflussmittel an den Dichtflächen durch Feuchtigkeit oder Wasseraufnahme aufquellt und dadurch zu Undichtigkeiten führen kann. Auch inhomogen verteilte Flussmittelrückstände an den Dichtflächen können bereits zu einer ungleichmäßigen Verpressung der Dichtringe bzw. von Elastomerdichtungen führen und bereits dadurch aufgrund der mechanischen bzw. geometrischen Oberfläche an der Dichtfläche mit dem Lötflussmittel zu Undichtigkeit führen. Bei Verwendung von Kleben oder Dichtmassen kann durch Flussmittelrückstände die Adhäsion zum metallischen Untergrund beeinträchtigt werden.

Aus diesem Grund ist es erforderlich, das Lötflussmittel an den Dichtflächen nach dem Löten im Lötofen zu entfernen. Die Entfernung des Lötflussmittels an den Dichtflächen erfolgt beispielsweise mechanisch mit einem Metallabriebschleifmittel oder Bürstenfasern. Eine derartige mechanische Reinigung ist jedoch aufwendig und teuer und kann außerdem an den Dichtflächen zu zusätzlichen Riefen führen, die wiederum Undichtigkeiten verursachen. Auch kann das abgetragene Lötflussmittel in das Innere des Wärmeübertragers gelangen, was zu weiteren Problemen führen kann. Bei einer chemischen Entfernung des Lötflussmittels an den Dichtflächen, z. B. mit aggressiven Chemikalien, wie Säuren oder Laugen, wird im Allgemeinen das Lötflussmittel nicht vollständig oder rasch genug entfernt oder die aggressiven Chemikalien verbleiben in Form von Rückständen auf dem Wärmeübertrager und führen anschließend zu einer Korrosion oder zu einer Kontamination des durch den Wärmeüberträger geleiteten Fluides.

Die Aufgabe der vorliegenden Erfindung besteht deshalb darin, ein Verfahren zur Herstellung eines Wärmeübertragers zur Verfügung zu stellen, bei dem Ablagerungen an Dichtflächen des Wärmeübertragers nach dem Löten einfach, kostengünstig und ohne negative Auswirkungen entfernt werden können.

Diese Aufgabe wird gelöst mit einem Verfahren zur Herstellung eines Wärmeübertragers mit einem ersten Strömungsraum zum Durchleiten eines ersten Fluides mit den Schritten: zur Verfügung stellen von Komponenten des Wärmeübertragers mit einer Lotplattierung, Verbinden der Komponenten des Wärmeübertragers zu einem Wärmeübertragerblock, Einbringen des Wärmeübertragerblockes in einen Lötofen und Löten des Wärmeübertragerblockes, Ausbringen des gelöteten Wärmeübertragerblockes als Wärmeübertrager aus dem Lötöfen, Entfernen von Ablagerungen an wenigstens einer Dichtfläche der Wärmeübertragers, wobei die Ablagerungen an der wenigstens einen Dichtfläche mit einem Laserstrahl entfernt werden.

Die Ablagerungen an der wenigstens einen Dichtfläche werden dabei nach dem Ausbringen des gelöteten Wärmeübertragers aus dem Lötofen mit einem Laserstrahl entfernt. Die Energiedichte des Laserstrahls ist dabei dahingehend ausgelegt, dass der Laserstrahl einerseits dazu ausreicht, die Ablagerungen, z. B. ein Lötflussmittel oder Lot, von der Dichtfläche zu entfernen und andererseits das Material des Wärmeübertrages, z. B. Aluminium eine Aluminiumlegierung oder Edelstahl, von dem Laserstrahl im Wesentlichen nicht bearbeitet wird. Beim Auftreffen des Laserstrahles auf die Ablagerungen verdampfen diese, so dass dadurch in einfacher Art und Weise die Ablagerungen an der wenigstens einen Dichtfläche entfernt werden können, ohne dass Rückstände auf der Dichtfläche verbleiben oder an anderen Stellen des Wärmeübertragers Rückstände verbleiben.

Insbesondere werden die Ablagerungen während des Lötvorganges auf der wenigstens einen Dichtfläche gebildet und/oder die Ablagerungen werden von Flussmittel und/oder Lot gebildet und/oder der Wärmeübertragerblock wird mit einem CAB-Lötverfahren in dem Lötofen gelötet. Ein CAB-Lötverfahren ist ein Controlled Atmosphere Brazing-Verfahren, bei dem der Wärmeübertragerblock unter Schutzgas, z. B. Stickstoff, in einem Lötofen, insbesondere einem Durchlaufofen, gelötet wird. Für den Lötvorgang ist dabei ein Lötflussmittel, z. B. Kalium-Fluoraluminate, erforderlich, um störende Oxide bzw. oberflächige Verunreinigungen auf der Lötoberfläche zu vermeiden. Dieses Lötflussmittel als Flussmittel setzt sich an Dichtflächen aufgrund der hohen Fluidität des Lötflussmittels während des Lötvorganges auf diesen Dichtflächen ab und behindert bei einem Verbau des Wärmeübertragers die Dichtigkeit an der wenigstens einen Dichtfläche. Die wenigstens eine Dichtfläche ist somit im Bereich einer Ein- und/oder Auslassöffnung für ein durch den Wärmeübertrager zu leitendes Fluid ausgebildet.

In einer weiteren Ausgestaltung wird der Laserstrahl im Pulsbetrieb oder mit einer Pulsüberhöhung auf die wenigstens eine Dichtfläche gestrahlt.

In einer ergänzenden Ausführungsform wird der Laserstrahl von einem Markierungslaser, z. B. mit einer maximalen elektrischen Leistung von weniger als 5 kW, 3 kW, 2 kW oder 1 kW, zur Verfügung gestellt und/oder der Laserstrahl wird von einem Stab- oder Faserlaser zur Verfügung gestellt. Der Laserstrahl wird somit nicht von einem Schneidlaser mit einer hohen Energiedichte des Laserstrahles zur Verfügung gestellt. Schneidlaser sind für ein Entfernen von Ablagerungen nicht geeignet, weil diese aufgrund ihrer hohen Dichte des Laserstrahles das Aluminium des Wärmeübertragers an der wenigstens einen Dichtfläche durchschneiden würden.

Vorzugsweise ist während des Auftreffens des Laserstrahles auf die wenigstens eine Dichtfläche der Laser und/oder die wenigstens eine Dichtfläche, auf welche der Laserstrahl auftrifft, feststehend.

In einer Variante wird der Laserstrahl mit einem optischen System, z. B. mit wenigstens einer Linse und/oder wenigstens einem Spiegel, auf unterschiedliche Stellen, insbesondere die gesamte Oberfläche, der wenigstens einen Dichtfläche geführt. Während des Aufbringens oder Strahlens des Laserstrahles auf die wenigstens eine Dichtfläche ist sowohl der Laser als auch die wenigstens eine Dichtfläche, d. h. der Wärmeübertrager, feststehend und bewegt sich nicht. Lediglich durch ein optisches System wird der Laserstrahl auf die Oberfläche jeweils einer Dichtfläche geführt und durch ein Führen des Laserstrahles auf die gesamte Oberfläche jeweils einer Dichtfläche kann somit die gesamte Oberfläche einer Dichtfläche von der Ablagerung mit dem Laserstrahl gereinigt werden. Weist der Wärmeübertrager mehr als eine Dichtfläche auf, was im Allgemeinen der Fall ist, weil ein Wärmeübertrager sowohl über eine Ein- und eine Auslassöffnung für ein erstes Fluid verfügt und an jeder Ein- oder Auslassöffnung eine Dichtfläche vorhanden ist, so kann es erforderlich sein, dass nach dem Entfernen der Ablagerungen an einer ersten Dichtfläche das Werkstück zu dem Laser bewegt wird, so dass auch die zweite Dichtfläche im Bereich des Lasers liegt und anschließend bei einer feststehenden Dichtfläche und einem feststehenden Laser wiederum durch das optische System auch auf die zweite Dichtfläche der Laserstrahl auf die gesamte Oberfläche der Dichtfläche geführt wird. Vorzugsweise wird dabei der Laserstrahl auf die Oberfläche jeweils einer Dichtfläche in einer Schraffur mit eins bis zehn, insbesondere drei Durchgängen geführt. Auf die Oberfläche der wenigstens einen Dichtfläche wird somit der Laserstrahl mehrfach geführt, bei drei Durchgängen beispielsweise wird der Laserstrahl dreifach auf die Oberfläche der Dichtfläche geführt.

Zweckmäßig werden mit einer Absaugeinrichtung beim Auftreffen des Laserstrahles auf die Ablagerungen entstehende Dämpfe oder Gase abgesaugt. Mit dem Laserstrahl wird das Lötflussmittel verdampft und der Dampf kann mit der Absaugeinrichtung abgesaugt werden, so dass die entstehenden Dämpfe oder Gase in der Umgebung nicht zu Schäden führen können.

In einer weiteren Ausführungsform wird der Laserstrahl von einem Festkörperlaser mit Wellenlänge im nahinfraroten Bereich von im Wesentlichen 1 µm, insbesondere zwischen 1062 und 1064 nm, emittiert.

Insbesondere wird der Wärmeübertrager zusätzlich außerhalb der wenigstens einen Dichtfläche mit dem Laserstrahl beschriftet. Nach dem Entfernen des Lötflussmittels an den Dichtflächen kann mit dem Laserstrahl, da dieser von einem Beschriftungslaser zur Verfügung gestellt wird, der Wärmeübertrager zusätzlich mit einer Beschriftung versehen werden, so dass dadurch in vorteilhafter Weise nicht in anderer Weise eine Beschriftung auf dem Wärmeübertrager, z. B. in Form einer Plakette, aufzubringen ist.

In einer weiteren Ausgestaltung wird der Wärmeübertrager an der wenigstens einen Dichtfläche nach dem Löten keiner mechanischen und/oder chemischen Reinigung unterzogen und/oder die wenigstens eine Dichtfläche, insbesondere die Komponente mit der wenigstens einen Dichtfläche, vor dem Löten spanabhebend, z. B. mit Fräsen, Schleifen oder Drehen, bearbeitet wird oder ist bearbeitet worden und/oder der Wärmeübertrager weist einen zweiten Strömungsraum zum Durchleiten eines zweiten Fluides auf. Wenigstens eine Komponente des Wärmeübertragers wird vor dem Zusammenbau zu dem Wärmeübertragerblock an wenigstens einer Dichtfläche spanabhebend bearbeitet.

Zweckmäßig umfasst der Wärmeübertrager übereinander gestapelte Scheibenpaare, wobei zwischen den beiden Scheiben eines Scheibenpaares ein erster Strömungsraum durch Durchleiten des ersten Fluides ausgebildet ist und der zweite Strömungsraum zwischen zwei benachbarten Scheibenpaaren ausgebildet ist.

In einer zusätzlichen Variante sind zwischen den Scheibenpaaren an dem zweiten Strömungsraum Rippen, insbesondere Wellrippen, und/oder wenigstens ein Rohr angeordnet und/oder der erste Strömungsraum ist als ein, vorzugsweise mäanderförmiger, Strömungskanal ausgebildet.

In einer ergänzenden Ausführungsform sind die Komponenten des Wärmeübertragers, insbesondere die Scheiben, die Distanzstücke und/oder die Rippen, miteinander verlötet und/oder die Komponenten des Wärmeübertragers, insbesondere die Scheiben, die Distanzstücke und/oder die Rippen, bestehen wenigstens teilweise, insbesondere vollständig, aus Metall, insbesondere Aluminium oder Edelstahl.

Im Nachfolgenden werden Ausführungsbeispiele der Erfindung unter Bezugnahme auf die beigefügten Zeichnungen näher beschrieben. Es zeigt:
- Fig. 1: einen Ansicht eines Teils eines Verdampferwärmeübertragers,
- Fig. 2: eine Draufsicht einer Scheibe des Verdampferwärmeübertragers gemäß Fig. 1
- Fig. 3: eine perspektivische Ansicht des Verdampferwärmeübertragers,
- Fig. 4: eine Teilansicht eines Wärmeübertragers mit Dichtflächen,
- Fig. 5: einen Längsschnitt einer Öffnung des Wärmeübertragers gemäß Fig. 4,
- Fig. 6: eine Teilansicht eines weiteren Wärmeübertragers mit Dichtflächen,
- Fig. 7: einen Längsschnitt einer Öffnung des Wärmeübertragers gemäß Fig. 6.

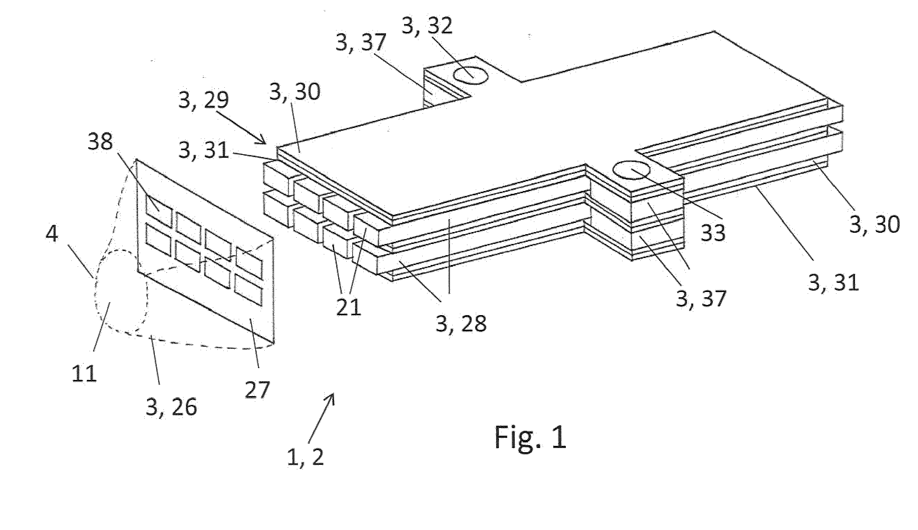

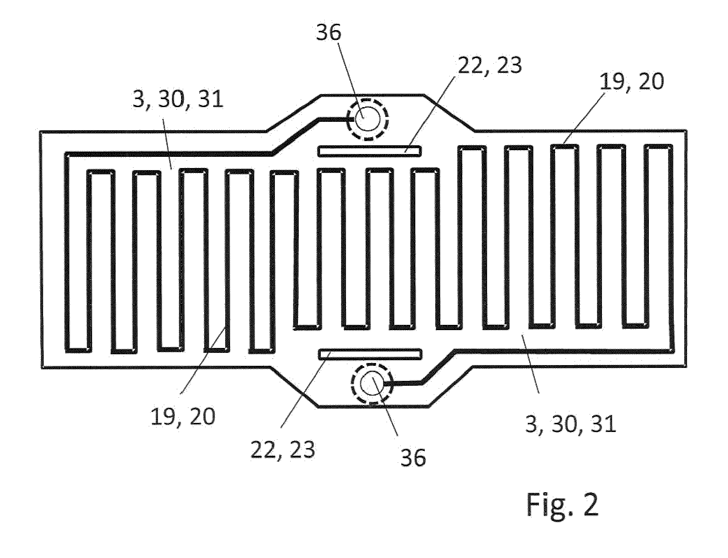

In Fig. 1 bis 3 ist ein Ausführungsbeispiel eines als Verdampferwärmeübertragers 2 ausgebildeten Wärmeübertragers 1 dargestellt. Der Verdampferwärmeübertrager 2 dient dazu, mit durch dem Verdampferwärmeübertrager 2 geleiteten Abgas oder Ladeluft ein Arbeitsmedium in dem Verdampferwärmeübertrager 2 zu erwärmen und zu verdampfen. Der Wärmeübertrager 1 weist eine erste Einlassöffnung 32 zum Einleiten des Arbeitsmediums als erstes Fluid und eine erste Auslassöffnung 33 zum Ausleiten des Arbeitsmediums aus dem Verdampferwärmeübertrager 2 auf. Ein in Fig. 1 nicht dargestellter erster Strömungsraum 19 bildet sich zwischen einer Vielzahl von Scheibenpaaren 29 aus. Die Scheibenpaare 29 weisen jeweils eine obere Scheibe 30 und eine untere Scheibe 31 auf. Zwischen den Scheibenpaaren 29 sind jeweils Distanzstücke 37 angeordnet. Dabei ist in die untere Scheibe 31 ein mäanderförmiger Strömungskanal 20 als erster Strömungsraum 19 (Fig. 2) eingearbeitet, so dass sich zwischen der oberen und unteren Scheibe 30, 31 der mäanderförmige Strömungskanal 20 ausbildet, durch welchen das Arbeitsmedium von der Einlassöffnung 32 zu der Auslassöffnung 33 geleitet wird. Die obere und untere Scheibe 30, 31 ist dabei mittels einer stoffschlüssigen Verbindung, nämlich einer Lötverbindung (nicht dargestellt), miteinander verbunden. Dabei weist der Verdampfenvärmeübertragers 2 eine Vielzahl von übereinander angeordneten Scheibenpaare 29 sowie dazwischen angeordneten Rohren 28 auf. Dies ist in Fig. 1 und 2 nur teilweise dargestellt.

Die obere und untere Scheibe 30, 31 weist ferner eine Durchlassöffnung 36 jeweils an der ersten Ein- und Auslassöffnung 32, 33 auf (eine Einlass-Durchlassöffnung 36 an der ersten Einlassöffnung 32 und eine Auslass-Durchlassöffnung 36 an der ersten Auslassöfinung 33) und an den Durchlassöffnungen 36 liegen zwischen den Scheibenpaaren 29 die Distanzstücke 37 mit Durchlassöffnungen 36 (Fig. 1), so dass dadurch das Arbeitsmedium auch durch die Scheibenpaare 29 zu darunter oder darüber liegenden Scheibenpaaren 29 an den Distanzstücken 37 strömen kann. Auch die Distanzstücke 37 weisen somit jeweils die Durchlassöffnung 36 auf. Zwischen den Scheibenpaaren 29 sind vier im Querschnitt rechteckförmige Rohre 28 angeordnet. Die im Querschnitt rechteckförmigen Rohre 28 bilden einen zweiten Strömungsraum 21 zum Durchleiten von Abgas oder Ladeluft als zweites Fluid, damit von dem Abgas oder der Ladeluft Wärme auf das Arbeitsmedium übertragen wird und dadurch das Arbeitsmedium in dem Verdampferwärmeübertrager 2 verdampft.

Ein Boden 27 (Fig. 1) weist im Querschnitt rechteckförmige Diffusoröffnungen 38 auf. Der Boden 27 ist an den Diffusoröffnungen 38 mit den Rohren 28 stoffschlüssig verbunden, d. h. ist an diese angelötet. An dem Boden 27 ist ein in Fig. 1 nur strichliert dargestellter Gasdiffusor 26 angeordnet, welcher eine zweite Einlassöffnung 11 zum Einleiten des Abgases oder der Ladeluft aufweist. In Fig. 1 ist der Boden 27 in Explosionsdarstellung noch nicht an den Rohren 28 befestigt.

Die Komponenten 3 des Verdampferwärmeübertragers 4, z. B. die Scheibenpaare 29, der Gasdiffusor 26 oder das Distanzstück 37, bestehen aus Edelstahl oder Aluminium und sind mit einer stoffschlüssigen Verbindung als Lötverbindung miteinander verbunden.

In Fig. 2 ist eine Ansicht der Scheibe 30, 31 des Verdampferwärmeübertragers 2 dargestellt. Die obere und untere Scheibe 30, 31 weist zwei Durchlassöffnungen 36 zum Durchleiten des Arbeitsmediums auf. Dabei ist in die untere Scheibe 31 der Strömungskanal 20 als erster Strömungsraum 19 eingearbeitet, welcher die beiden Durchlassöffnungen 36 miteinander verbindet. Dadurch kann das Arbeitsmedium von der oberen (Einlass-)Durchlassöffnung 36 durch den Strömungskanal 20 zu der unteren (Auslass-)Durchlassöffnung 36 gemäß Fig. 2 strömen. Zwischen zwei Scheibenpaaren (Fig. 1) sind jeweils an den Durchlassöffnungen 36 Distanzstücke 37 mit Durchlassöffnungen 36 angeordnet. Dehnungsöffnungen 22 als Dehnungsschlitze 23 verhindern Temperaturspannungen.

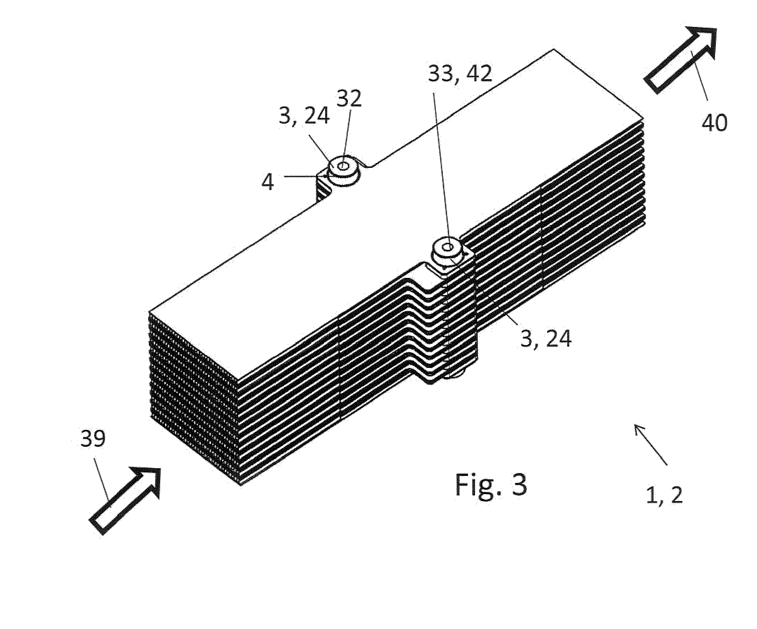

In Fig. 3 ist eine perspektivische Ansicht des Verdampferwärmeübertragers 4 als Wärmeüberträger 1 ohne den Gasdiffusor 26 dargestellt. An den beiden Durchlassöffnungen 36 der obersten Scheibe 30 ist jeweils eine Buchse 24 angeordnet. An der Buchse 24 ist eine erste Einlassöffnung 32 für das Arbeitsmedium und eine erste Auslassöffnung 33 für das Arbeitsmedium vorhanden. Das Abgas wird durch den zweiten Strömungsraum 21 geleitet, welcher zwischen den Scheibenpaaren 29 auftritt. Somit wird das Abgas durch einen Eintritt 39 eingeleitet und durch einen Austritt 40 aus dem Wärmeübertragers 1 abgeleitet.

Bei der Herstellung des in den Fig. 1 bis 3 dargestellten Wärmeübertrages 1 werden zunächst die Komponenten 3, z. B. die Buchse 24, der Gasdiffusor 26, der Boden 27, das Rohr 28 und die Scheiben 30, 31, des Wärmeübertragers 1 zu einem Wärmeübertragerblock zusammengefügt und anschließend werden in einem Lötofen die mit Lot plattierten Komponenten 3 aus Aluminium oder einer Aluminiumlegierung oder Edelstahl durch Löten stoffschlüssig und fluiddicht miteinander verbunden. Die beiden Buchsen 24 und die beiden Gasdiffusoren 26 als Komponenten 3 des Wärmeübertrages 1 weisen je eine Dichtfläche 4 auf. Die Dichtfläche 4 ist dabei vorzugsweise eben ausgebildet, kann jedoch auch gekrümmt ausgebildet sein. An die Dichtflächen 4 des Wärmeübertragers 1 werden Leitungen abgeschlossen, so dass dadurch den Wärmeübertrager 1 das Arbeitsmedium und Abgas oder Ladeluft geleitet werden kann. Die Dichtflächen 4 sind dabei als vollständig umlaufende Ringe an der ersten Ein- und Auslassöffnung 32, 33 für das Arbeitsmedium und an der zweiten Ein- und Auslassöffnung 11 für das Abgas ausgebildet. Zwischen den Leitungen und den Dichtflächen ist dabei ein nicht dargestellter Dichtring bei einem Verbau des Wärmeübertragers 1 anzuordnen. Während des Lötens in einem Lötofen mit einem CAB-Lötverfahren gelangt auf die Dichtflächen 4 Lötflussmittel, z. B. Kalium-Fluoraluminate.

Nach dem Abkühlen und Ausbringen des Wärmeübertragers aus dem Lötofen wird mit einem Beschriftungslaser auf die Dichtflächen 4 des Wärmeübertragers 1 ein Laserstrahl aufgebracht und dadurch können die Ablagerungen als Lötflussmittel von den Dichtflächen 4 entfernt werden. Das Lötflussmittel auf den Dichtflächen 4 wird durch die Energie des Laserstrahlles im Wesentlichen verdampft, so dass dadurch nur Dämpfe oder Gase beim Aufbringen des Laserstrahles auf das Lötflussmittet an den Dichtflächen 4 entsteht. Diese entstehenden oder Dämpfe werden mit einer Absaugeinrichtung abgesaugt. Dadurch gelangen in vorteilhafter Weise in den ersten und zweiten Strömungsraum des Wärmeübertragers keine Ablagerungen, welche zu Schäden an dem Wärmeübertrager 1 oder einem Fluidkreislauf von Fluid, das durch den Wärmeübertrager 1 geleitet wird, führen könnte. Der Laserstrahl wird von einem Beschriftungslaser zur Verfügung Beschriftungs- oder Markierungslaser sind in der Anschaffung preiswert und weisen eine kompakte Bauform auf. Dadurch kann preiswert mit einem geringen technischen Aufwand effektiv die Dichtfläche 4 von dem Lötflussmittel gereinigt werden, so dass beim anschließenden Verbau des Wärmeübertragers 1 eine fluiddichte Verbindung von Leitungen oder Schläuchen mit den Dichtflächen 4 gewährleistet ist. Vorzugsweise sind dabei an den Dichtflächen 4 Dichtringe zwischen der Dichtfläche 4 und den Leitungen oder Schläuchen angeordnet. Die Dichtflächen 4 können dabei auch als Flansche ausgebildet sein.

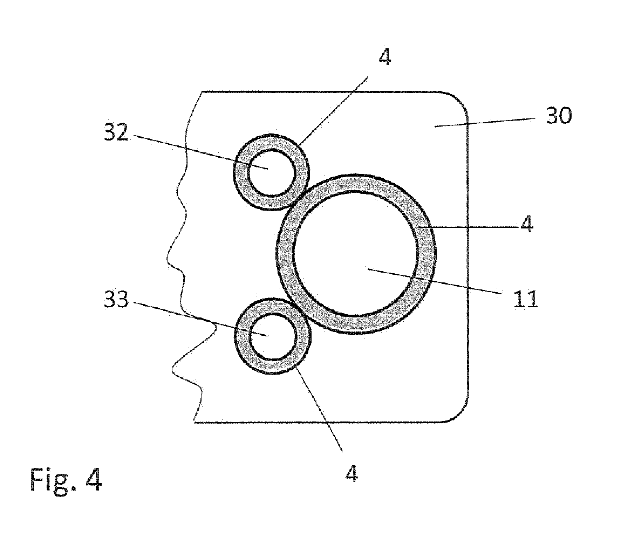

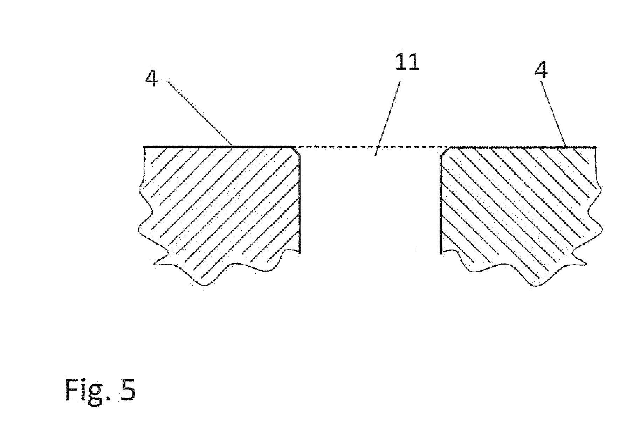

In Fig. 4 und 5 ist eine Teilansicht eines anderen Wärmeübertragers 1 dargestellt. In der Teilansicht gemäß Fig. 4 ist an dem Wärmeübertragers 1 eine zweite Einlassöffnung 11 für ein zweites Fluid und eine erste Ein- und Auslassöffnung 32, 33 für ein erstes Fluid sichtbar. An den Öffnungen 11, 32 und 33 sind umlaufend die ebenen Dichtflächen 4 vorhanden. Fig. 5 zeigt einen Längsschnitt der zweiten Einlassöffnung 11. Auf diese Dichtflächen 4 wird nach dem Verlötet der Komponenten 3 des Wärmeübertragers 1 mit einem Beschriftungs- oder Markierungslaser auf die Dichtflächen 4 ein Laserstrahl aufgebracht und dadurch das Lötflussmittel auf den Dichtflächen 4 entfernt. Die Energiedichte des Laserstrahls ist dabei dahingehend ausgelegt, dass zwar einerseits das Lötflussmittel an den Dichtflächen 4 entfernt bzw. verdampft werden kann, andererseits die Struktur des Aluminiums der Komponenten 3 als Scheibe 30 an den ebenen Dichtflächen 4 nicht angegriffen wird, d. h. dass beispielsweise von dem Laserstrahl das Aluminium der Komponente mit der Dichtfläche 4 nicht durchschnitten wird. Der Laserstrahl wird dabei mit einem optischen System auf die gesamte Oberfläche der Dichtflächen 4 geführt.

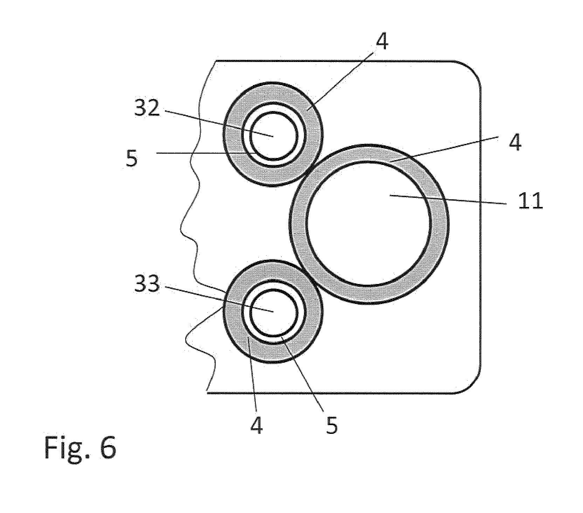

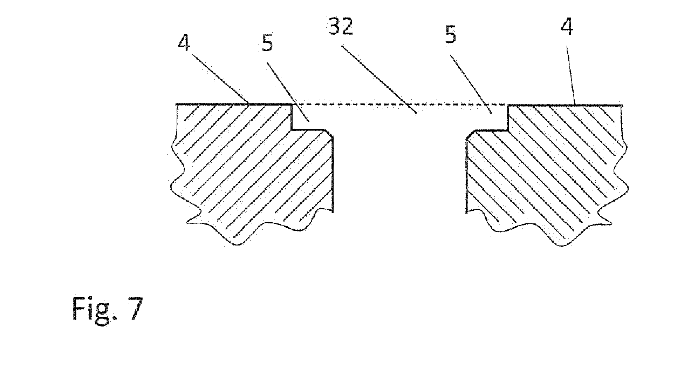

In Fig. 6 und 7 ist ein weiteres Ausführungsbeispiel eines Wärmeübertragers 1 in einer Teilansicht dargestellt. Im Nachfolgenden werden im Wesentlichen nur die Unterschiede zu dem Ausführungsbeispiel gemäß Fig. 4 und 5 beschrieben. Die erste Ein- und Auslassöffnung 32, 33 für das erste Fluid weist zusätzlich eine Stufe 5 auf. Die Stufe 5 kann einerseits dazu genutzt werden, um an der Stufe 5 einen Dichtring anzuordnen oder dass ein Flansch einer Leitung oder eines Schlauches entsprechend komplementär zu der Stufe 5 ausgebildet ist und dadurch in der Stufe 5 zu liegen kommt.

In einem weiteren, nicht dargestellten Ausführungsbeispiel entsprechend dem in Fig. 4 und 5 dargestellten Ausführungsbeispiel ist an der Dichtfläche 4 konzentrisch zu der zweiten Einlassöffnung 11 eine Ringnut angeordnet und in der Ringnut wird nach dem Entfernen des Lötflussmittels von der Sichtfläche 4 und vor dem Verbau des Wärmeübertragers 1 ein Dichtring angeordnet.

Insgesamt betrachtet sind mit dem erfindungsgemäßen Verfahren zur Herstellung des Warmeübertragers 1 wesentliche Vorteile verbunden. Lötflussmittel als Ablagerungen an den Dichtflächen 4 des Wärmeübertragers werden in kostengünstiger Weise mit einem Laserstrahl entfernt, in dem das Lötflussmittel mit dem Laserstrahl im Wesentlichen verdampft wird. Dadurch treten bei der Herstellung des Wärmeübertragers 1 die Nachteile bei einem Entfernen von Lötflussmittel mit mechanischen Mitteln und chemischen Stoffen nicht auf. Es können dadurch Kosten gespart und es ist eine effektive Reinigung und Entfernung des Lötflussmittels von den Dichtflächen 4 für eine fluiddichte Verbindung von Leitungen oder Schläuchen mit einem Strömungsraum des Wärmeübertragers 1 gewährleistet.

### Bezugszeichenliste

- 1_{.}: Wärmeübertrager
- 2.: Verdampferwärmeübertrager
- 3.: Komponente des Wärmeübertragers
- 4.: Dichtfläche
- 5.: Stufe
- 11.: Zweite Einfassöffnung für das zweit Fluid, Abgas
- 19.: Erster Strömungsraum für Arbeitsmedium
- 20.: Strömungskanal
- 21.: Zweiter Strömungsraum für Abgas
- 22.: Dehnungsöffnung
- 23.: Dehnungsschlitz
- 24.: Buchse
- 26.: Gasdiffusor
- 27.: Boden
- 28.: Rohr
- 29.: Scheibenpaar
- 30.: Obere Scheibe
- 31.: Untere Scheibe
- 32.: Erste Einlassöffnung für das erste Fluid, Arbeitsmedium
- 33.: Erste Auslassöffnung für das erste Fluid, Arbeitsmedium
- 36.: Durchlassöffnung
- 37.: Distanzstück
- 38.: Diffusoröffnung
- 39.: Eintritt Abgas
- 40.: Austritt Abgas

## Patentansprüche

1. Verfahren zur Herstellung eines Wärmeübertragers (1) mit einem ersten Strömungsraum (19) zum Durchleiten eines ersten Fluides mit den Schritten:
- zur Verfügung stellen von Komponenten (24, 26, 27, 30, 31) des Wärmeübertragers (1) mit einer Lotplattierung,
- Verbinden der Komponenten (24, 26, 27, 30, 31) des Wärmeübertragers (1) zu einem Wärmeübertragerblock,
- Einbringen des Wärmeübertragerblockes in einen Lötofen und Löten des Wärmeübertragerblockes,
- Ausbringen des gelöteten Wärmeübertragerblockes als Wärmeübertrager (1) aus dem Lötöfen,
- Entfernen von Ablagerungen an wenigstens einer Dichtfläche (4) des Wärmeübertragers (1),
**dadurch gekennzeichnet, dass**
die Ablagerungen an der wenigstens einen Dichtfläche (4) mit einem Laserstrahl entfernt werden.

2. Verfahren nach Anspruch 1, **dadurch gekennzeichnet, dass** die Ablagerungen während des Lötvorganges auf der wenigstens einen Dichtfläche gebildet werden und/oder die Ablagerungen von Flussmittel und/oder Lot gebildet werden und/oder der Wärmeübertragerblock mit einem CAB-Lötverfahren in dem Lötofen gelötet wird.

3. Verfahren nach einem oder mehreren der vorhergehenden Ansprüche, **dadurch gekennzeichnet, dass** der Laserstrahl im Pulsbetrieb oder mit einer Pulsüberhöhung auf die wenigstens eine Dichtfläche (4) gestrahlt wird.

4. Verfahren nach einem oder mehreren der vorhergehenden Ansprüche, **dadurch gekennzeichnet, dass** der Laserstrahl von einem Markierungslaser, z. B. mit einer maximalen elektrischen Leistung von weniger als 5 kW, 3 kW, 2 kW oder 1 kW, zur Verfügung gestellt wird und/oder der Laserstrahl von einem Stab- oder Faserlaser zur Verfügung gestellt wird.

5. Wärmeübertrager nach einem oder mehreren der vorhergehenden Ansprüche, **dadurch gekennzeichnet, dass** während des Auftreffens des Laserstrahles auf die wenigstens eine Dichtfläche (4) der Laser und/oder die wenigstens eine Dichtfläche (4), auf welche der Laserstrahl auftrifft, feststehend ist.

6. Verfahren nach einem oder mehreren der vorhergehenden Ansprüche, **dadurch gekennzeichnet, dass** der Laserstrahl mit einem optischen System, z. B. mit wenigstens einer Linse und/oder wenigstens einem Spiegel, auf unterschiedliche Stellen, insbesondere die gesamte Oberfläche, der wenigstens einen Dichtfläche (4) geführt wird.

7. Verfahren nach einem oder mehreren der vorhergehenden Ansprüche, **dadurch gekennzeichnet, dass** mit einer Absaugeinrichtung beim Auftreffen des Laserstrahles auf die Ablagerungen entstehende Dämpfe oder Gase abgesaugt werden.

8. Verfahren nach einem oder mehreren der vorhergehenden Ansprüche, **dadurch gekennzeichnet, dass** der Laserstrahl von einem Festkörperlaser mit Wellenlänge im nahinfraroten Bereich von im Wesentlichen 1µm, insbesondere zwischen 1062 und 1064 nm, emittiert wird.

9. Verfahren nach einem oder mehreren der vorhergehenden Ansprüche, **dadurch gekennzeichnet, dass** der Wärmeübertrager (1) zusätzlich außerhalb der wenigstens einen Dichtfläche (4) mit dem Laserstrahl beschriftet wird.

10. Verfahren nach einem oder mehreren der vorhergehenden Ansprüche, **dadurch gekennzeichnet, dass** der Wärmeübertrager (1) an der wenigstens einen Dichtfläche (4) nach dem Löten keiner mechanischen und/oder chemischen Reinigung unterzogen wird und/oder die wenigstens eine Dichtfläche (4), insbesondere die Komponente (24, 26, 27, 30, 31) mit der wenigstens einen Dichtfläche (4), vor dem Löten spanabhebend, z. B. mit Fräsen, Schleifen oder Drehen, bearbeitet wird oder bearbeitet worden ist und/oder der Wärmeübertrager (1) einen zweiten Strömungsraum (21) zum Durchleiten eines zweiten Fluides aufweist.
